# EUROPEAN PATENT APPLICATION

(11) **EP 0 662 390 A2**
(43) Date of publication of application: **12.07.1995**
(21) Application number: 94309841.8
(22) Date of filing: 28.12.1994
(51) Int. Cl.: B29C 65/14

(54) **Apparatus and method for welding thermoplastic resin members**

(30) Priority: 28.12.1993 JP 350095/93
(71) Applicant: KUREHA KAGAKU KOGYO KABUSHIKI KAISHA, Chuo-ku Tokyo 103 (JP)
(72) Inventor: Yamanobe, Youichirou, c/o Nishiki Res. Lab., Iwaki-shi, Fukushima-ken 974 (JP); Kodama, Kouichi, c/o Nishiki Res. Lab., Iwaki-shi, Fukushima-ken 974 (JP); Usui, Satoshi, c/o Nishiki Res. Lab., Iwaki-shi, Fukushima-ken 974 (JP)
(74) Representative: Baverstock, Michael George Douglas

(57) **Abstract**

A welding apparatus is applied to a butt welding method in which end faces to be welded, of a pair of thermoplastic resin tubular members are heated and melted by a heater (20) in a non-contact state and the melted end faces are urged against each other to be welded. This welding apparatus comprises a pair of clamp devices (16,18) for clamping and holding the pair of tubular members (12,14) horizontally and coaxially, a drive device (30) for moving one of the clamp devices toward or away from the other clamp device, and a heater (20) for melting the end faces of the tubular members. The welding apparatus is so constructed that when the heater is located between the end faces of the tubular members to be welded, clearance is formed between heating surfaces of the heater and the corresponding end faces of the tubular members clamped by the clamp devices and the heating surfaces are formed so that the clearance decreases toward the bottom.

## Description

The present invention relates to a butt welding method or butt fusion method, more particularly, an apparatus and a method for connecting a pair of tubular members made of a thermoplastic resin by heating end faces thereof and then pressing them together.

Tubular members made of a variety of synthetic resins are conventionally used in various applications. For example, tubular members formed of a general-purpose thermoplastic resin such as polyvinyl chloride, polypropylene, etc. are popularly used as distributing water pipes in houses or plants, etc., pipes for chemicals, etc. Further, tubular members made of a thermoplastic resin excellent in heat resistance and solvent resistance such as polyphenylene sulfide (hereinafter referred to as "PPS"), polyether ether ketone, polyvinylidene fluoride, etc. are used as pipes for ultrapure water, in fabrication of electronic devices such as LSI,etc.

In actual piping using such tubular members of thermoplastic synthetic resins, it becomes necessary to connect a tubular member to another or to connect a tubular member to a tubular end of instrument. Among various methods for connecting tubular members, a widely employed method is a welding method in which a heater heats to melt end faces of two tubular members as opposed to each other and thereafter the melted end faces are urged against each other to be connected thereby. As a typical welding method, a contact type welding method in which end faces to be welded are melted in direct contact with the heater is known. This contact type welding method has such a problem that when a material for tubular members is PPS or a polyether ether ketone, it becomes difficult to peel off the tubular members from the heater.

For this reason, a recent trend is to employ a welding method of a non-contact type in which the end faces are melted with a clearance between the end faces to be welded and the heater, as disclosed in Japanese Patent Laid-Open No. 1-110128 for example. A known apparatus applicable to this non-contact type welding method is a welding apparatus comprising clamps for holding a pair of tubular members to be welded horizontally and coaxially, and a heater set between the clamps, as disclosed in Japanese Patent Laid-Open No. 5-193004 for example. In this welding apparatus, one clamp is mounted on a base so as to be movable toward or away from the other clamp and the heater is arranged as capable of receding from a movement path of tubular member. Such an apparatus permits the end faces of tubular members to be melted in a non-contact manner, and after melted, the tubular members are joined to each other while bringing the movable clamp toward the other clamp.

In the conventional welding apparatus as described above, the shape of the heater is of a flat plate, in which two surfaces or heating surfaces are parallel to each other. Also, the heater is set in a vertical direction and the tubular members are held in a horizontal direction. Accordingly, the heating surfaces of the heater are set in parallel with the end faces of the tubular members opposed thereto.

Normally, air existing in clearance between the heating surfaces of heater and the respective end faces of tubular members flows from bottom to top because of heat of the heater. Thus, when the heating surfaces of the heater are parallel to the end faces of tubular members, the upper portion of the end faces becomes higher in temperature than the lower portion thereof, thereby making a melt depth of the upper portion greater. Consequently, when the tubular members are welded using the conventional welding apparatus, there may be a problem that the weld strength of the upper portion is different from that of the lower portion in the weld portion between the tubular members. In addition, a projection or bead formed in the weld portion may become larger with an increase in elevation, which makes the bead projecting on the inner circumferential surface of the weld portion non-uniform in the circumferential direction. This would cause a problem that disturbance occurs in fluid flowing in the tubular members thus welded. In order to solve such a problem it can be considered that a smaller pressing pressure is applied between the tubular members so as to decrease the size of the bead, but such a method results in lowering the weld strength of the weld portion so as not to be suitable for practical use.

It is, therefore, an object of the present invention to provide a welding apparatus and a welding method of the non-contact type, by which a bead formed in a weld portion between tubular members, as well as the weld strength of the weld portion, becomes substantially uniform in the circumferential direction.

Achieving the above object, an aspect of the present invention is featured by an apparatus for welding a pair of thermoplastic resin members, comprising: a pair of holding devices for holding the thermoplastic resin members, respectively, to support them horizontally and coaxially; a drive device for moving one of the holding devices toward or away from the other holding device; and a heater for heating and melting end faces to be welded, of the thermoplastic resin members, arranged as movable between a heating position between the holding devices, and a receding position apart from the heating position, wherein when the heater is located at the heating position, the heater has a pair of heating surfaces opposed to the corresponding end faces of the thermoplastic resin members held by the holding devices, the heating surfaces being substantially symmetric to each other with respect to a predetermined reference plane which is normal to a common axis of the held thermoplastic resin members, and the heating surfaces having projection regions which are defined by projecting outlines of the end faces of the held thermoplastic resin members on the corresponding heating surfaces along the common axis, each of the projection regions being shaped such that a distance between a lower portion of the projection region and the reference plane is longer than a distance between an upper portion of the projection region and the reference plane.

Another aspect of the present invention is featured by a welding method for welding a pair of thermoplastic resin members comprising: a step of holding the thermoplastic resin members horizontally and coaxially so that end faces to be welded of the thermoplastic resin members are opposed and spaced to each other; a step of locating a heater between the end faces of the thermoplastic resin members with a certain clearance between the end faces; a step of heating and melting the end faces of the thermoplastic resin members by heat of the heater; and a step of pressing the melted end faces of the thermoplastic resin members against each other to join the thermoplastic resin members together, wherein when the heater is located between the end faces to be welded of the thermoplastic resin members, the heater has a pair of heating surfaces opposed to the corresponding end faces of the held thermoplastic resin members, the heating surfaces being substantially symmetric to each other with respect to a predetermined reference plane which is normal to a common axis of the held thermoplastic resin members, and the heating surfaces having projection regions which are defined by projecting outlines of the end faces of the held thermoplastic resin members on the corresponding heating surfaces along the common axis, each of the projection regions being shaped such that a distance between a lower portion of the projection region and the reference plane is longer than a distance between an upper portion of the projection region and the reference plane.

It is preferable that said thermoplastic resin members are tubular members. Also, it should be noted that in the present invention the tubular members include tube connectors, profiles and nozzles, etc., and tubular portions of meters or devices such as valves as well as the pipes and tubes. Further, the tubular members include ones having a polygonal section, a semi-circular section, etc., as well as a circular section.

By utilizing such a heater, the clearance between at least the projection regions in the heating surfaces of the heater and the corresponding end faces to be welded of the thermoplastic resin members decreases toward the bottom. Therefore, molten states of the end faces are improved and may be substantially uniform throughout the circumference. As a result, a bead formed in a weld portion between the members, as well as the weld strength of the weld portion, may be substantially uniform in the circumferential direction.

The present invention will become more fully understood from the detailed description given hereinbelow and the accompanying drawings which are given by way of illustration only, and thus are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description. In the drawings:
Fig. 1 is a plan view to show an embodiment of the welding apparatus according to the present invention;
Fig. 2 is a front view of the welding apparatus shown in Fig. 1;
Fig. 3 is a side view of the welding apparatus shown in Fig. 1;
Fig. 4 is a front view of a heater used in the welding apparatus shown in Fig. 1;
Fig. 5 is a cross section taken along V-V line of Fig. 4;
Fig. 6 is a partial, cross-sectional view to show an end face of a tubular member to be welded;
Fig. 7 is a side view to show a modification of the heater; and
Fig. 8 is a side view to show another modification of the heater.

The preferred embodiments of the present invention will be described in detail with reference to the accompanying drawings. In the following description, like references characters designate like or corresponding parts throughout the several views.

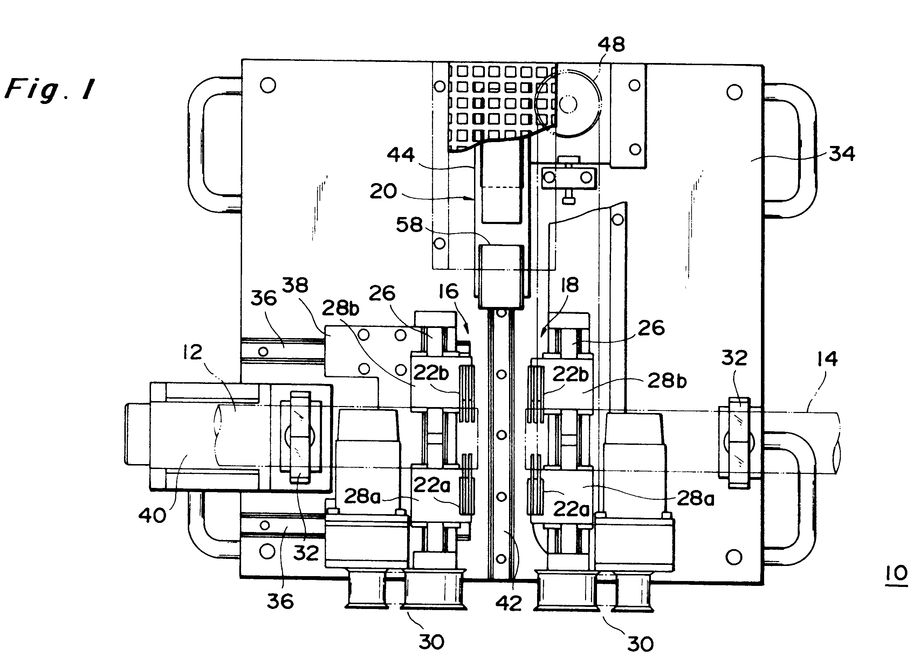

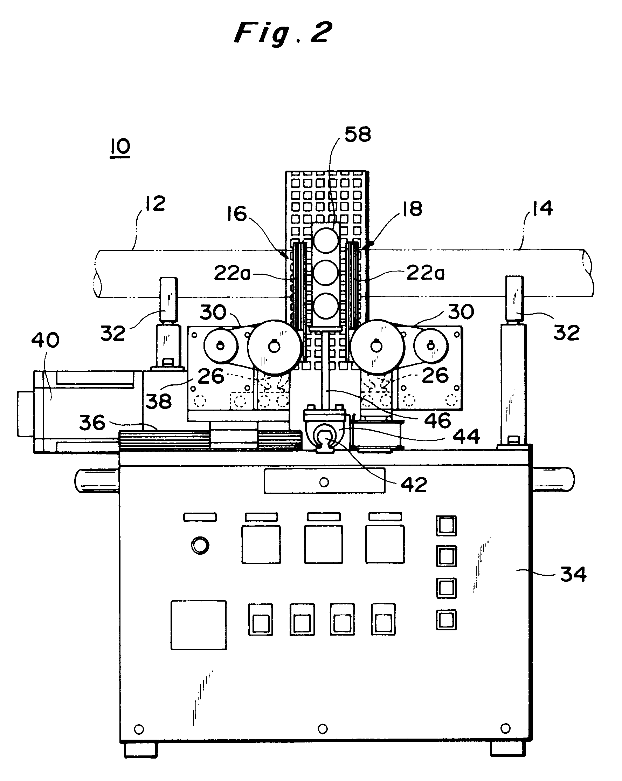

Fig. 1 to Fig. 3 show an embodiment of the welding apparatus for tubular members according to the present invention. As shown, this welding apparatus 10 basically includes a pair of clamps or holding devices 16, 18 for clamping respective tubular members 12, 14 of a thermoplastic resin, for example of PPS, and a heater 20 disposed between the clamps 16, 18.

Each clamp 16, 18 has a pair of clamp parts 22a, 22b each composed of a plurality of clamp plates arranged in parallel with each other. V-shape cuts 24a, 24b are formed in side edges opposed to each other, of these clamp parts 22a, 22b. The clamp parts 22a, 22b are fixed on sliders 28a, 28b, respectively, set as slidable on a guide rail 26, and thus are arranged as movable toward or away from each other by an appropriate drive device 30. Thus, moving the clamp parts 22a, 22b toward each other, an end portion of an associated tubular member 12, 14 can be clamped between the cuts 24a, 24b of the clamp parts 22a, 22b. The tubular members 12, 14 thus clamped by the clamps 16, 18 extend in the horizontal direction and are set on a same axis. Here, reference numeral 32 designates a support on which a central portion of the associated tubular member 12, 14 is mounted and which supports it in a horizontal posture.

The guide rail 26 for one clamp 18 is fixed on a base 34 of the welding apparatus 10. Accordingly, the tubular member 14 clamped by this clamp 18 is stationary relative to the base 34. Further, the guide rail 26 for the other clamp 16 is fixed on a slider 38, which is set as slidable on a guide rail 36 provided on the base 34. The guide rail 36 extends in the same direction as the center axis of the tubular member 12 clamped. Thus, moving the slider 38 along the guide rail 36, the clamp 16 can be moved toward or away from the stationary clamp 18. Thus, the end face of the tubular member 12 clamped by the clamp 16 can be moved toward the opposed end face of the other tubular member 14, then to be pressed against it. This slider 38 is arranged to be driven by a drive device 40.

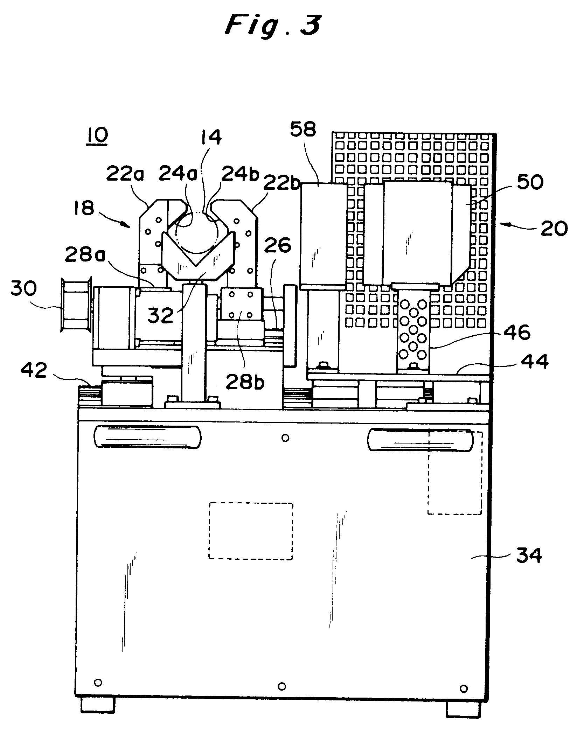

The heater 20 is located between the clamps 16, 18. This heater 20 is installed through a support plate 46 on a slider 44 arranged as slidable on a guide rail 42. The guide rail 42 is fixed in position on the base 34 between the clamps 16, 18 and extends in the direction perpendicular to the center axis of the tubular members 12, 14 clamped by the clamps 16, 18. An appropriate drive device 48 is connected to the slider 44. Controlling this drive device 48, the slider 44, in turn the heater 20, can be reciprocated between a heating position between the tubular members 12, 14, and a receding position (the position shown in Fig. 1 and Fig. 3) outside the heating position.

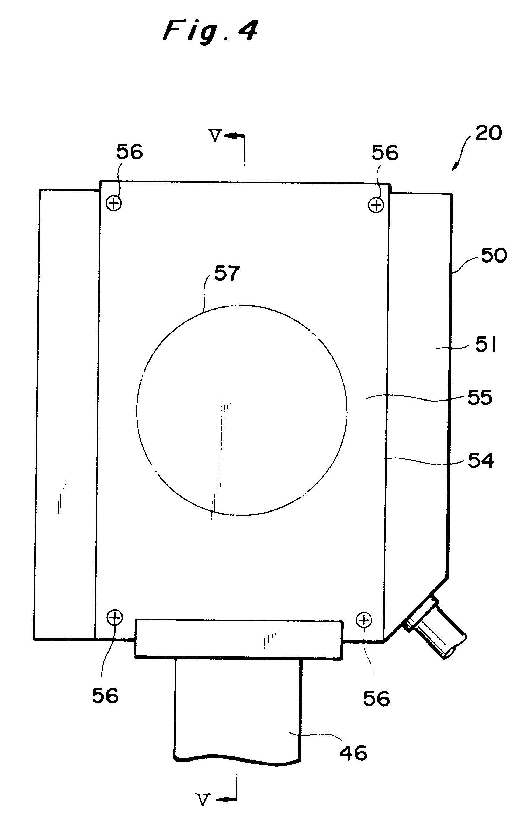

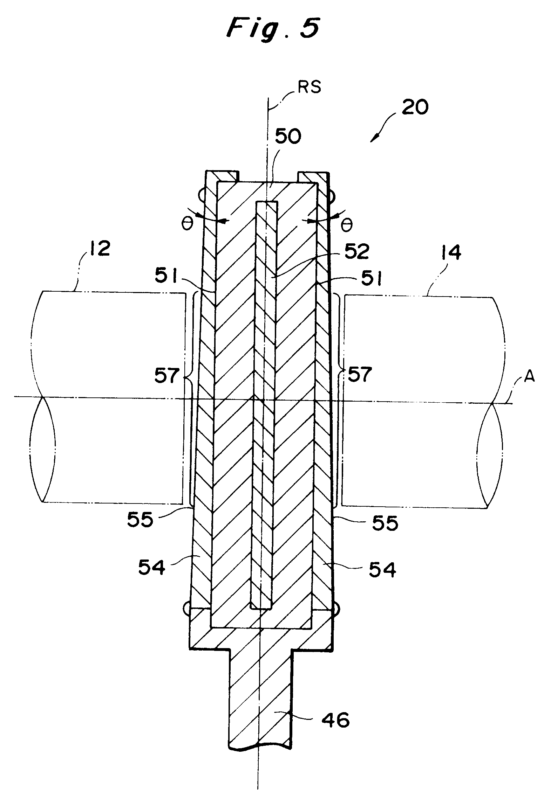

As clearly shown in Fig. 4 and Fig. 5, the heater 20 comprises a case 50 of a flat-plate shape made for example of a porous ceramic plate, and a heat source 52 such as a nichrome wire enclosed in the case 50. In this embodiment, a cover plate 54, preferably of a ceramic, is secured in a fit state by screws or bolts 56 etc. on each surface 51, opposed to the clamp 16, 18, of the case 50.

When the heater 20 is set at the heating position, the surfaces 51 of case 50 extend vertically and are perpendicular to the center axis A of the tubular members 12, 14 clamped by the clamps 16, 18. The shape of each cover plate 54 is like a wedge and it is fixed on the case 50 so that the thickness of the entire heater 20 increases toward the bottom. Therefore, the heater 20 itself has a wedge-like shape.

Heating surfaces 55 of the cover plate 54 which are opposed to the respective end faces of the tubular members 12, 14 are flat surfaces and are symmetric to each other with respect to a reference plane RS. The reference plane RS is parallel to the surfaces 51 of the case 50 and extends at a center between the surfaces 51 in the vertical direction. An angle ϑ of the heating surface 55 relative to the reference plane RS or the corresponding surface 51 of the case 50 is in the range of 0.3° to 1.5°, preferably in the range of 0.4° to 1.2°, more preferably in the range of 0.4° to 1°. If the slant angle ϑ is greater than 1.5°, the clearance needs to be increased between the heater 20 and the end face of the tubular member 12, 14, which makes adjustment of heating conditions difficult. On the other hand, if the angle ϑ is smaller than 0.3°, there is no substantial difference from a vertically extending heating surface, resulting in forming a nonuniform bead. Further, an area of the heating surface 55 of the cover plate 54 is large enough to heat to melt the end face of tubular member 12, 14 and, therefore, the size of the case 50 is also properly set in accordance with the size of the cover plate 54.

In Fig. 1 to Fig. 3 reference numeral 58 denotes a spacer of a flat plate for keeping constant the clearance of the end faces to be welded, of the tubular members 12, 14 upon heating, which is installed on the slider 44. Although not shown clearly in Figs. 1 to 3, the slider 44 consists of a main body and thin plates removably attached on the surfaces of the main body.

Next described are procedures for welding the tubular members 12, 14 using the welding apparatus 10 having the above construction.

First, a start switch (not shown) is pressed to activate the drive device 48, whereby the spacer 58 is moved by a constant distance to be located between the clamps 16, 18. Next, the drive devices 30 of clamps 16, 18 are driven to widen the space between the clamp members 22a, 22b and the end portions of tubular members 12, 14 are set in the space. Then the end faces to be welded, of the tubular members 12, 14 are adjusted in position for contact with the opposed surfaces of spacer 58 and thereafter the space between the clamp members 22a, 22b is decreased to firmly clamp the tubular members 12, 14 between the clamp members 22a, 22b.

After that, the drive device 48 is further driven to set the heater 20 at the predetermined heating position between the clamps 16, 18. Since the maximum thickness of the heater 20 is smaller than the thickness of the spacer 58, the heater 20 is set at certain clearance between the opposed end faces of tubular members 12, 14.

Next, when the power is supplied to the heat source 52 in the heater 20, heat from the heating surfaces 55 of heater 20 melts the end faces of tubular members 12, 14. On this occasion, air in the clearance between the heating surfaces 55 of heater 20 and the end faces of tubular members 12, 14 opposed thereto flows from bottom to top. Since the distance between the upper portion of each end face and the corresponding heating surface 55 is longer than the distance between the lower portion of the end face and the heating surface 55, molten states of the end faces of tubular members 12, 14 become substantially uniform throughout the circumference.

After a lapse of a heating time preliminarily determined, the drive device 48 is controlled to take the heater 20 and spacer 58 to the initial, receding position away from the space between the clamps 16, 18. It is preferable that while heating the end faces of tubular members 12, 14, the above-mentioned thin plates are removed from the spacer main body to prevent the spacer 58 from interfering with the tubular members 12, 14 during the movement of heater 20. During or immediately after the movement of heater 20 to the receding position, the drive device 40 is driven to move the clamp 16 toward the clamp 18 and to make the end face of the tubular member 12 in contact with the end face of the other tubular member 14 so as to urge them against each other under a predetermined pressure for a predetermined time.

After stop of the drive device 40 and after a lapse of a time for which the weld portion is completely cooled, the drive devices 30 are driven to open the clamps 16, 18 and the tubular members 12, 14 having been clamped are taken out of the welding apparatus 10, thereby obtaining the welded tubular members 12, 14.

A bead substantially uniform in the circumferential direction is formed on each of the inner circumferential surface and outer circumferential surface of the weld portion of the tubular members 12, 14 thus welded, and the weld strength becomes substantially uniform in the circumferential direction.

Next described are results of experiments where the tubular members were actually welded using the above welding apparatus 10.

In a first experiment PPS pipes (25A manufactured by Kureha Kagaku Kogyo: wall thickness 2.4 mm) were used as the tubular members. The slant angle ϑ of the heating surfaces 55 of heater 20 relative to the reference plane RS was 0.75°, the temperature of the surface of case 50 of heater 20 was 470°, the distance between the lower portion of each end face of pipe and the corresponding heating surface 55 of heater 20 was 1 mm, a heating time was 30 seconds, a press contact time was 120 seconds, and the press contact pressure was 600 kPa. In this case, an amount of projection of a bead formed on the inner circumferential surface of the weld portion of pipe was about 0.9 mm, which was substantially uniform in the circumferential direction.

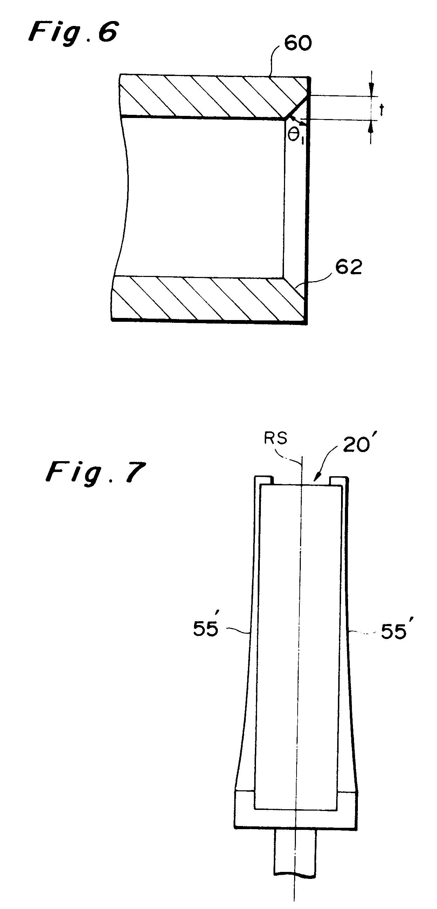

In a second experiment, welding was performed under the same conditions as above using the same PPS pipes 60 except for a tapered face 62 formed at an inner peripheral edge of the each end face, as shown in Fig. 6. In this case, the angle ϑ₁ of the tapered face 62 was 45°, and a distance t along the radial direction between the outer edge of the tapered face 62 and the inner surface of the pipe 60 was 1 mm. Similarly to the first experiment, a good result was obtained in the second experiment, in which an amount of projection of a bead formed on the inner circumferential surface of the weld portion of pipe 60 was 0.5 mm and the bead was substantially uniform in the circumferential direction.

A further experiment was carried out under the same conditions as in the first experiment except that the slant angle ϑ of the heating surfaces 55 of heater 20 was 2°. A result of the experiment was such that the upper part of the weld portion was insufficiently melted and the bead was formed larger in the lower part of the weld portion than in the upper part.

An additional experiment was conducted under the same conditions as in the second experiment except that the angle ϑ of the heating surfaces 55 of heater 20 was 0.2°. A result of the experiment was such that an average amount of projection of a bead formed on the inner circumference of the weld portion was 0.5 mm but an amount of projection of the bead in the upper part of the weld portion was 1 mm.

It should be noted that portions of the heating surfaces 55 which can melt the end faces of tubular members 12, 14 most efficiently are regions 57 shown in Figs. 4 and 5. These region 57 are projection regions which are defined by projecting outlines of the end faces of clamped tubular members 12, 14 on the heating surfaces 55 along the axis A of the tubular members, as seen in Fig. 5. Therefore, if these projection regions 57 at least are inclined at the abovementioned slant angle, the above effects can be obtained.

The preferred embodiments of the present invention were described above in detail, but it should be noted that the present invention is by no means limited to the above embodiments. For example, the heater 20 in the above embodiments was so arranged that the nichrome wire was enclosed as the heat source 52 in the ceramic case 50, but the heat source is not limited to the nichrome wire and the material for the case is not limited to ceramics. The heater may be one in which the case and heat source were cast in an incorporated manner.

Further, the above embodiments employed such an arrangement that the cover plates 54 were attached to the outside of the case 50, but without using the cover plates 54, the surface of the case 50 may be processed in a wedge shape to be used as the heating surfaces.

Further, the material for the cover plates 54 may be a metal such as aluminum, brass, iron, copper, etc. excellent in heat conduction.

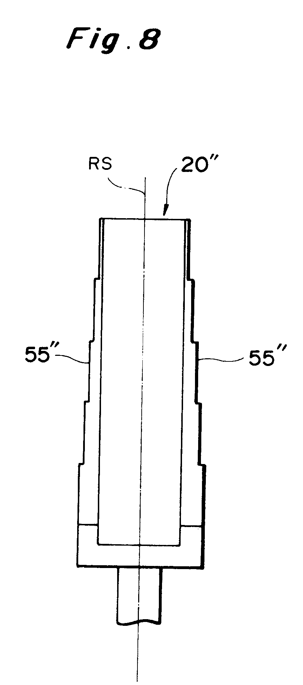

Yet further, the heating surfaces of the heater are not limited to flat surfaces, but any shape can be applicable insofar as the thickness of the heater increases toward the bottom. For example, as diagrammatically shown in Fig. 7, the heater 20' may have curved heating surfaces 55' in a concave shape. In applications of such a shape, an average slant angle of the curved surfaces 55' relative to the reference plane RS should be determined within the above angular range, that is, in the range of 0.3° to 1.5°. In another modification, as shown in Fig. 8, the heating surfaces 55'' may be processed stepwise so that the thickness of heater 20'' increases toward the bottom. Also in this case, an average slant angle of the surfaces 55'' should be determined within the above angular range. Here, the average slant angle means an angle between the reference plane RS and a phantom plane which is selected to minimize the volume between the phantom plane and the projection region opposed to the end face to be welded of tubular member. It should be noted that the shapes of the heating surfaces of the heater shown in the present specification and drawings are illustrative and that any other shapes than the above-described shapes are within the scope of the present invention insofar as they can realize the feature that the surface temperature of the end faces to be welded, of the tubular members are kept substantially constant throughout the circumference.

Further, the present invention can be applied to thermoplastic resin members of the other shapes, for example a rod member having a circular cross-section.

From the invention thus described, it will be obvious that the invention may be varied in many ways. Such variations are not to be regarded as a departure from the scope of the invention, and all such modifications as would be obvious to one skilled in the art are intended to be included within the scope of the following claims.

## Claims

1. An apparatus for welding a pair of thermoplastic resin members, comprising:
a pair of holding devices for holding the thermoplastic resin members, respectively, to support them horizontally and coaxially;
a drive device for moving one of said holding devices toward or away from the other holding device; and
a heater for heating and melting end faces to be welded, of the thermoplastic resin members, arranged as movable between a heating position between said holding devices, and a receding position apart from the heating position;
wherein when said heater is located at said heating position, said heater has a pair of heating surfaces opposed to the corresponding end faces of the thermoplastic resin members held by said holding devices, said heating surfaces being substantially symmetric to each other with respect to a predetermined reference plane which is normal to a common axis of the held thermoplastic resin members, and said heating surfaces having projection regions which are defined by projecting outlines of the end faces of the held thermoplastic resin members on the corresponding heating surfaces along said common axis, each of said projection regions being shaped such that a distance between a lower portion of said projection region and said reference plane is longer than a distance between an upper portion of said projection region and said reference plane.

2. A welding apparatus according to Claim 1, said thermoplastic resin members are tubular members.

3. A welding apparatus according to Claim 1 or Claim 2 wherein an average slant angle of said projection regions in said heating surfaces relative to said reference surface is in the range of 0.3° to 1.5°.

4. A welding apparatus according to any one of Claims 1 to 3 wherein said projection regions in said heating surfaces of said heater are flat surfaces.

5. A welding apparatus according to any one of Claims 1 to 3 wherein said projection regions in said heating surfaces of. said heater are curved surfaces.

6. A welding apparatus according to any one of the preceding claims wherein said projection regions in said heating surfaces of said heater are formed stepwise.

7. A welding method for welding a pair of thermoplastic resin members comprising:
a step of holding the thermoplastic resin members horizontally and coaxially so that end faces to be welded of the thermoplastic resin members are opposed and spaced to each other;
a step of locating a heater between the end faces of the thermoplastic resin members with a certain clearance between the end faces;
a step of heating and melting the end faces of the thermoplastic resin members by heat of said heater; and
a step of pressing the melted end faces of the thermoplastic resin members against each other to join the thermoplastic resin members together,
wherein when said heater is located between the end faces to be welded of the thermoplastic resin members, said heater has a pair of heating surfaces opposed to the corresponding end faces of the held thermoplastic resin members, said heating surfaces being substantially symmetric to each other with respect to a predetermined reference plane which is normal to a common axis of the held thermoplastic resin members, and said heating surfaces having projection regions which are defined by projecting outlines of the end faces of the held thermoplastic resin members on the corresponding heating surfaces along said common axis, each of said projection regions being shaped such that a distance between a lower portion of said projection region and said reference plane is longer than a distance between an upper portion of said projection region and said reference plane.

8. A welding method according to Claim 7, said thermoplastic resin members are tubular members.

9. A welding method according to Claim 7 or Claim 8, wherein an average slant angle of said projection regions in said heating surfaces relative to said reference surface is in the range of 0.3° to 1.5°.

10. A welding method according to any one of Claims 7 to 9, wherein said projection regions in said heating surfaces of said heater are flat surfaces.

11. A welding method according to any one of Claims 7 to 9, wherein said projection regions in said heating surfaces of said heater are curved surfaces.

12. A welding method according to any one of Claims 7 to 11, wherein said projection regions in said heating surfaces of said heater are formed stepwise.
